Europäisches Patentamt

European Patent Office

Office européen des brevets

(19)

(11) Publication number: **0 117 534 B2**

# (12) NEW EUROPEAN PATENT SPECIFICATION

(45) Date of publication of the new patent specification : **06.11.91 Bulletin 91/45**

(51) Int. Cl.⁵ : **F01N 3/02**

(21) Application number : **84101913.6**

(22) Date of filing : **23.02.84**

(54) **Method for controlling emission of exhaust gas by a Diesel engine.**

(30) Priority : **25.02.83 JP 31660/83**

(43) Date of publication of application :
**05.09.84 Bulletin 84/36** *

(45) Publication of the grant of the patent :
**27.05.87 Bulletin 87/22**

(45) Mention of the opposition decision :
**06.11.91 Bulletin 91/45**

(84) Designated Contracting States :
**DE FR GB**

(56) References cited :
**EP-A- 0 010 384**
**EP-A- 0 070 619**
**DE-A- 2 519 609**
**DE-A- 2 815 365**
**DE-A- 3 121 274**
**DE-U- 8 215 874**
**JP-A- 5 622 107**

(56) References cited :
**US-A- 3 751 914**
**US-A- 4 009 986**
**US-A- 4 319 896**
**US-A- 4 424 671**
**SAE 810118**

(73) Proprietor : **HITACHI, LTD.**
**6, Kanda Surugadai 4-chome**
**Chiyoda-ku, Tokyo 100 (JP)**

(72) Inventor : **Usui, Toshifumi**
**322 Bouda Apt. Takaba**
**Katsuta-shi Ibaraki-ken (JP)**
Inventor : **Yanagisawa, Shouzo**
**171-7, Suwama Toukai-mura**
**Naka-gun Ibaraki-ken (JP)**
Inventor : **Iwai, Kazumi**
**3-1398-29, Miwa**
**Mito-shi Ibaraki-ken (JP)**

(74) Representative : **Patentanwälte Beetz sen. -**
**Beetz jun. Timpe - Siegfried - Schmitt-Fumian**
**Steinsdorfstrasse 10**
**W-8000 München 22 (DE)**

EP 0 117 534 B2

## Description

The present invention relates to a method for controlling the emission of exhaust gas of Diesel engines of vehicles according to the preamble of claims 1 and 2.

In general, systems for reducing particulates in the exhaust gas employed in exhaust emission control devices for Diesel engines, including the mechanical particulate trapping system and the electrostatic precipitation system, collect particulates on a trap. One of the methods of determining the regeneration timing of a filter trapping particulates from the exhaust gas from a Diesel engine hitherto known proposes that exhaust pressures are continuously stored in a memory in advance so that oxidation starts during idling as soon as the measured exhaust gas pressure reaches a limit value.

A device of this type has been disclosed in Japanese Utility Model Laid-Open No. 57-136814 (1982) "Exhaust gas particulates treatment device for combustion engine" published on August 26, 1982.

However, in the method according to the prior art, it is highly probable that the engine is turned off during the oxidation so that the exhaust gas flow and the oxidation air flow are stopped when the exhaust gas pipe is still at high temperature, and this high temperature is liable to break the filter, damage the exhaust pipe, and also affect the exhaust emission control device.

Accordingly, it is an object of the present invention to provide a method for controlling the emission of exhaust gas of Diesel engines which does not cause breaking of the filter or damaging of the exhaust pipe, and does not affect the exhaust emission control device.

The above object is achieved according to claim 1. Claim 2 relates to an advantageous embodiment thereof.

Fig. 1 is a schematic diagram of a control device carrying out the method according to the present invention, and

Fig. 2 is a flow chart of one embodiment of the method according to the present invention.

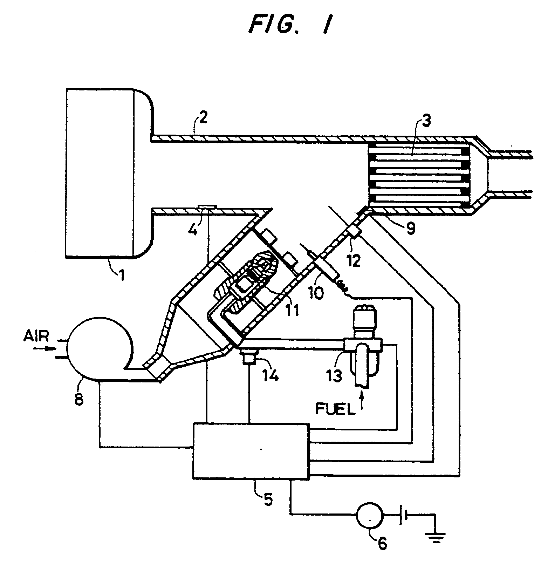

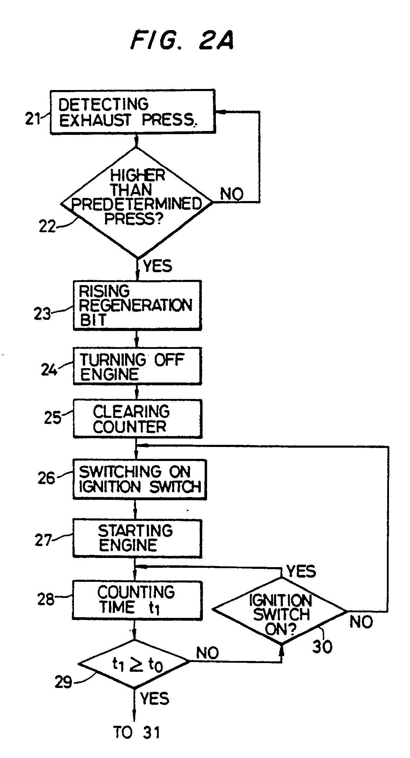

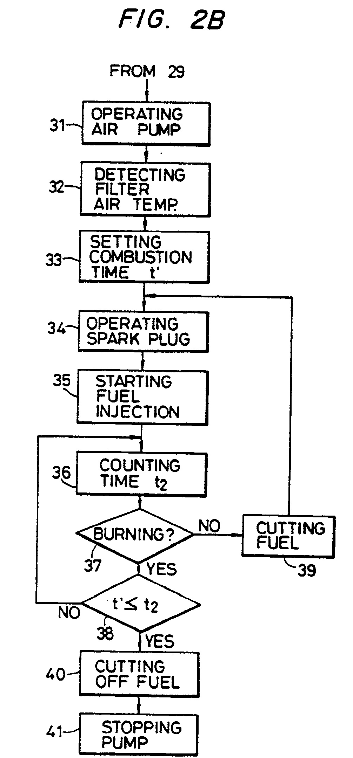

One embodiment of the present invention will now be described with reference to Figs. 1 and 2A/2B. The exhaust gas emitted from a Diesel engine 1 passes through an exhaust gas pipe 2 and a filter 3 after the key switch 6 is switched on. The particulates, black smoke, contained in the exhaust gas are trapped by the filter 3. However, because of the trapped black smoke, the pressure loss within the filter detected at step 21 rises so much that drivability and mileage are reduced. As soon as a pressure sensor 4 detects that the exhaust gas pressure has become higher than a predetermined value at step 22, this fact is stored in a microcomputer 5 at step 23. When the key switch 6 is turned off at step 24, a first timer (not shown) in the microcomputer 5 is reset at step 25. At the same time, the information that the predetermined value has been exceeded is not cleared but is left so that the timer starts to count at step 28 simultaneously with the turning on of the key switch 6 at step 26, and starting the engine at step 27. When the count $t_1$ of the first timer reaches the predetermined value $t_0$ at step 29, the air pump 8 starts to operate, and a spark plug 10 starts to ignite, and the current filter temperature is measured by a temperature sensor 9 at step 32 so that the combustion time period $t'$ during which the burner must burn to provide the oxidation can be determined at step 33. The fuel is ignited by the spark plug 10 at step 34. The solenoid valve 14 is opened at step 35, and the burner 11 is supplied with fuel oil at step 35. At the same time, a second timer (not shown) in the microcomputer 5 starts counting of the operating period $t'$ of the burner 11. The ignition is confirmed by the blame sensor 12 at step 37. When the combustion has continued for the necessary period ($t' \leq t_2$) at step 38, the fuel from the fuel pump 13 is cut off by the solenoid valve 14 at step 40 so that the flame is extinguished. Then, the fuel pump 13 is stopped at step 41.

Generally speaking, the engine of a vehicle is very seldom stopped immediately after it has been started. According to experiments, filter regeneration, or filter deoxidation, by a burner takes five minutes at the most. If a predetermined time $t_0$ is set at one minute, therefore, the regeneration is completed within six minutes after the engine start. The possibility that the engine is turned off during that period is much smaller than that when the regeneration is started at random. As a result, the frequency with which the burner and the other parts are exposed to heat radiated from the hot filter, and the cooling air is stopped, is so reduced that the reliability of the device is improved.

According to the present invention, the predetermined time $t_0$ is set to be no longer than ten minutes, because research results have shown that the time between the start, or cranking, and stop of an engine when it is turned off is very seldom less than fifteen minutes.

Since regeneration of the filter is difficult when the exhaust gas temperature is extremely low, the combustion time period $t'$ is extended at step 33 when the exhaust gas temperature at the start is detected to be low.

If the filter pressure loss exceeds a predetermined value within the predetermined time $t_0$, regeneration may be immediately started without waiting for the next time the engine is started.

The regeneration can also be started after travelling a predetermined distance after starting in a vehicle (e.g., a forwarding or delivery truck) which remains for long periods of time parked with its engine running, but which will travel long distances once it actually starts to move.

In all of the cases thus far described, filter regeneration is conducted within a predetermined period after the engine cranks, so that the filter and its peripheral devices need not be heated to a temperature higher than necessary, and so that the possibility of filter regeneration while the engine is turned off can be minimized. Considering that when the temperature of the filter exceeds the regeneration temperature, it regenerates itself when the vehicle is running at a high speed and heavy load, moreover, it is logical to conduct regeneration before the filter temperature gets too high because the filter is seldom heated to a temperature higher than a certain level within ten minutes after starting.

## Claims

1. A method of controlling the emission of exhaust gas of Diesel engines comprising the steps of
   (a) collecting particulates in the exhaust gas of the Diesel engine by using a filter (3), and
   (b) oxidizing the particulates by using a burner (11) which is ignited and operated for a combustion time period (t') after the pressure loss within said filter (3) has reached a predetermined value, by using a control device (4, 5, 6, 9, 10, 12, 14), **characterized** by the following steps:
   (c) determining a predetermined time interval ($t_0$) equal to or less than 10 minutes beginning at the time of the starting of the engine cranking following an engine turn-off condition after the predetermined value of the pressure loss was reached, and
   (d) igniting the burner (11) when the predetermined time interval ($t_0$) has expired.

2. The method according to claim 1, characterized in that the combustion time period (t') is controlled depending on the exhaust gas temperature of the Diesel engine.

## Patentansprüche

1. Verfahren zur Steuerung der Abgasemission eines Dieselmotors mit den Schritten
   (a) Auffangen von im Abgas des Dieselmotors befindlichen Feststoffen mittels eines Filters (3), und
   (b) Oxidieren der Feststoffe mittels eines Brenners (11), der dann, wenn der Druckabfall am Filter (3) einen vorbestimmten Wert erreicht hat, gezündet und für eine Brennperiode (t') betrieben wird,
   indem eine Steuerungseinrichtung (4, 5, 6, 9, 10, 12, 14) verwendet wird,
   **gekennzeichnet** durch die folgenden Schritte

   (c) Bestimmen eines vorbestimmten Zeitintervalls ($t_0$) kleiner oder gleich 10 Minuten, das beginnt, wenn nach dem abgeschalteten Zustand des Motors das Anlassen des Motors gestartet wird, nachdem der vorbestimmte Wert des Druckabfalls erreicht wurde,
   und
   (d) Zünden des Brenners (11), wenn das vorbestimmte Zeitintervall ($t_0$) verstrichen ist.

2. Verfahren nach Anspruch 1, dadurch gekennzeichnet, daß die Brennzeitperiode (t') in Abhängigkeit von der Abgastemperatur des Dieselmotors gesteuert wird.

## Revendications

1. Procédé pour commander l'émission des gaz d'échappement de moteurs diesel, comprenant les étapes consistant à
   (a) collecter des particules présentes dans le gaz d'échappement du moteur diesel en utilisant un filtre (3), et
   (b) oxyder les particules en utilisant un brûleur (11), qui est allumé et activé pendant l'intervalle de temps de combustion (t') après que la perte de pression dans ledit filtre (3) a atteint une valeur prédéterminée, moyennant l'utilisation d'un dispositif de commande (4,5,6, 9,10,12,14), caractérisé par les étapes suivantes :
   (c) déterminer un intervalle de temps prédéterminé ($t_0$) égal ou inférieur à 10 minutes à partir de l'instant du démarrage de lancement du moteur à la suite d'une condition d'arrêt du moteur une fois que la valeur prédéterminée de la perte de pression a été atteinte, et
   (d) l'allumage du brûleur (11) lorsque l'intervalle de temps prédéterminé ($t_0$) est écoulé.

2. Procédé selon la revendication 1, caractérisé en ce que l'intervalle de temps de combustion (t') est commandé en fonction de la température des gaz d'échappement du moteur diesel.

# FIG. 1

AIR

FUEL

# FIG. 2A

21 — DETECTING EXHAUST PRESS.

22 — HIGHER THAN PREDETERMINED PRESS? — NO

YES

23 — RISING REGENERATION BIT

24 — TURNING OFF ENGINE

25 — CLEARING COUNTER

26 — SWITCHING ON IGNITION SWITCH

27 — STARTING ENGINE

28 — COUNTING TIME $t_1$

30 — IGNITION SWITCH ON? — YES / NO

29 — $t_1 \geq t_0$ — NO

YES

TO 31

# FIG. 2B

FROM 29

31 — OPERATING AIR PUMP

32 — DETECTING FILTER AIR TEMP.

33 — SETTING COMBUSTION TIME t'

34 — OPERATING SPARK PLUG

35 — STARTING FUEL INJECTION

36 — COUNTING TIME $t_2$

37 — BURNING? → NO → CUTTING FUEL — 39

YES

38 — $t' \leq t_2$ → NO

YES

40 — CUTTING OFF FUEL

41 — STOPPING PUMP